# EUROPEAN PATENT SPECIFICATION

(11) **EP 4 120 183 B1**
(45) Date of publication and mention of the grant of the patent: **21.08.2024**
(21) Application number: 21795665.5
(22) Date of filing: 02.03.2021
(51) Int. Cl.: H04N 9/68, G06T 5/00, G06T 5/60, G06T 5/92

(54) **IMAGE ENHANCEMENT METHOD AND ELECTRONIC DEVICE**
BILDVERBESSERUNGSVERFAHREN UND ELEKTRONISCHE VORRICHTUNG
PROCÉDÉ D'AMÉLIORATION D'IMAGE ET DISPOSITIF ÉLECTRONIQUE

(30) Priority: 27.04.2020 CN 202010342912
(43) Date of publication of application: 18.01.2023
(73) Proprietor: HUAWEI TECHNOLOGIES CO., LTD., Shenzhen, Guangdong 518129 (CN)
(72) Inventor: HAN, Xiaofeng, Shenzhen, Guangdong 518129 (CN); CHEN, Xiaoliang, Shenzhen, Guangdong 518129 (CN); ZHANG, Tian, Shenzhen, Guangdong 518129 (CN); WANG, Jian, Shenzhen, Guangdong 518129 (CN); WU, Guoxing, Shenzhen, Guangdong 518129 (CN); GUO, Rui, Shenzhen, Guangdong 518129 (CN); MA, Jieyan, Shenzhen, Guangdong 518129 (CN)
(74) Representative: MERH-IP Matias Erny Reichl Hoffmann Patentanwälte PartG mbB
(86) International application number: PCT/CN2021/078787
(87) International publication number: WO 2021/218364

(56) References cited:
- WO-A1-2019/112085
- WO-A1-2020/049567
- CN-A- 107 302 657
- CN-A- 107 527 332
- CN-A- 107 851 309
- CN-A- 110 378 859
- CN-A- 110 428 382
- US-A1- 2016 379 340
- US-A1- 2019 294 931
- SOO YE KIM ET AL: "JSI-GAN: GAN-Based Joint Super-Resolution and Inverse Tone-Mapping with Pixel-Wise Task-Specific Filters for UHD HDR Video", ARXIV.ORG, CORNELL UNIVERSITY LIBRARY, 201 OLIN LIBRARY CORNELL UNIVERSITY ITHACA, NY 14853, 10 September 2019 (2019-09-10), XP081558051

## Description

### TECHNICAL FIELD

This application relates to the field of image processing technologies, and in particular, to an image enhancement method and an electronic device.

### BACKGROUND

With popularization of smartphones, a quantity of current mobile video users rapidly increases, and the user has an increasingly high requirement for picture quality. Therefore, parameters such as luminance and contrast in a video need to be adaptively adjusted, to optimize and enhance picture quality of an image.

Image enhancement is to use a series of image enhancement technologies to improve quality and a visual effect of an image, highlight a feature of interest in the image, and obtain valuable information in the image, so as to convert the image into a form more suitable for analysis and processing by a person or a machine, so that the processed image has a better effect for some specific applications. An image enhancement theory is widely applied to the biomedical field, the industrial production field, the public security field, the aerospace field, and the like.

Currently, in a related technology, an image enhancement method is to use a super-resolution (super resolution, SR) technology to up-convert an input image into a high-resolution output image. Another image enhancement method is to use a high dynamic range imaging (high dynamic range imaging, HDR) technology to extend a value of each pixel in an input image in a standard dynamic range to a high dynamic range. For the smartphone, a decoding result of a video decoder on a side of the smartphone is usually presented by using YUV color space instead of RGB color space. However, a current image enhancement method is generated by performing model training and inference by using a video in the RGB color space, and therefore is not applicable to a mobile platform such as the smartphone. In addition, the current image enhancement method is based on super-resolution algorithms of deep learning and machine learning. Consequently, there is a relatively large calculation amount, a real-time requirement of a mobile terminal for video processing cannot be met, and there is relatively high power consumption.
Document SOO YE KIM ET AL: "JSI-GAN: GAN-Based Joint Super-Resolution and InverseTone-Mapping with Pixel-Wise Task-Specific Filters for UHD HDR Video", ARXIVORG, 10 September 2019 generally proposes a divide-and-conquer approach in designing a GAN-based joint SR-ITM network, called JSI-GAN, which is composed of three task-specific subnets: an image reconstruction subnet, a detail restoration (DR) subnet and a local contrast enhancement (LCE) subnet. These subnets are designed so that they are appropriately trained for the intended purpose, learning a pair of pixel-wise 1D separable filters via the DR subnet for detail restoration and a pixel-wise 2D local filter by the LCE subnet for contrast enhancement. Moreover, to train the JSI-GAN effectively, it is proposed a novel detail GAN loss alongside the conventional GAN loss, which helps enhancing both local details and contrasts to reconstruct high quality HR HDR results.
Document CN 107 302 657 A generally discloses an image collection system applicable to the Internet of things. The system comprises a plurality of wireless image collection nodes, and an ARM wireless control unit, a multimode wireless baseband processing unit, a network server, an FPGA (Field-Programmable Gate Array) image processing unit, an NAS (Network Attached Storage) server and a client which are connected in sequence. The wireless image collection nodes are connected with the ARM wireless control unit. Each wireless image collection node comprises a camera which is placed in an area of which image needing to be collected and carries out photographing after a control command sent by the ARM wireless control unit is received and a wireless image transmission module which transmits the photographed image back. The FPGA image processing unit comprises an image signal processing module which processes a bayer domain image to an RGB domain and a single image super-resolution reconstruction module which carries out super-resolution reconstruction. The FPGA image processing unit outputs the processed image and stores the processed image to the NAS server. The client checks the image by accessing the NAS server.

### SUMMARY

This application provides an image enhancement method and an electronic device, to achieve a better image enhancement effect and resolve a problem, in the conventional technology, that a real-time requirement of a mobile terminal for video processing is not met by using an image quality algorithm. In particular, embodiments of the present invention are defined by the independent claims. Additional features of embodiments of the invention are presented in the dependent claims. In the following, parts of the description and drawings referring to former embodiments which do not necessarily comprise all features to implement embodiments of the claimed invention are not represented as embodiments of the invention but as examples useful for understanding the embodiments of the invention. Embodiments of the present application (or the present disclosure) provide an image enhancement method, an electronic device, and a computer-readable storage medium.

According to a first aspect, an embodiment of this application provides an image enhancement method, including: An electronic device obtains a color image in YUV color space; the electronic device performs image size enlargement on a first U-channel component and a first V-channel component in the color image, to obtain a processed second U-channel component and a processed second V-channel component, and performs super-resolution processing on a first Y-channel component in the color image, to obtain a processed second Y-channel component; and the electronic device performs high dynamic range imaging processing on the color image, to obtain component coefficients respectively corresponding to the first Ychannel component, the first U-channel component, and the first V-channel component; and
the electronic device obtains an enhanced channel component corresponding to the first Y-channel component based on the second Y-channel component and the component coefficient corresponding to the first Y-channel component, obtains an enhanced channel component corresponding to the first U-channel component based on the second U-channel component and the component coefficient corresponding to the first U-channel component, and obtains an enhanced channel component corresponding to the first V-channel component based on the second V-channel component and the component coefficient corresponding to the first V-channel component; and the electronic device obtains an enhanced color image through combination based on the enhanced channel component corresponding to the first Y-channel component, the enhanced channel component corresponding to the first U-channel component, and the enhanced channel component corresponding to the first V-channel component.

In this embodiment of this application, the electronic device uses different image enhancement methods for different channels of the color image in the YUV color space, that is, performs both super-resolution processing and high dynamic range imaging processing on the color image in the YUV color space, to improve an image enhancement effect.

In a possible design, a CPU in the electronic device enlarges the first U-channel component and the first V-channel component in the color image, to obtain the enlarged second U-channel component and the enlarged second V-channel component, and an NPU in the electronic device performs super-resolution processing on the first Y-channel component in the color image, to obtain the processed second Y-channel component; and the NPU in the electronic device performs high dynamic range imaging processing on the color image, to obtain the component coefficients respectively corresponding to the three channels. It may be learned that both the CPU and the NPU in the electronic device perform processing, to increase an image processing speed, so as to meet a real-time requirement of a mobile terminal for video processing.

In a possible design, the enhanced channel component corresponding to the first Y-channel component may meet the following condition: Y' = W*_{Y}* × Y , where Y' represents the enhanced channel component corresponding to the first Y-channel component, W*_{Y}* represents the component coefficient corresponding to the first Y-channel component, and Y represents the second Y-channel component;
the enhanced channel component corresponding to the first U-channel component may meet the following condition: U' = W*_{U}* × (U - ϕ₁) + ϕ₂, where U' represents the enhanced channel component corresponding to the first U-channel component, W*_{U}* represents the component coefficient corresponding to the first U-channel component, U represents the second U-channel component, ϕ₁ is a fixed parameter, ϕ₂ is a fixed parameter, and a value range of ϕ₁ and ϕ₂ is [0, 1]; and
the enhanced channel component corresponding to the first V-channel component may meet the following condition: V' = W*_{V}* × (V - ϕ₁) + ϕ₂, where V' represents the enhanced channel component corresponding to the first V-channel component, W*_{V}* represents the component coefficient corresponding to the first V-channel component, V represents the second V-channel component, ϕ₁ is a fixed parameter, ϕ₂ is a fixed parameter, and a value range of ϕ₁ and ϕ₂ is [0, 1].

It may be learned that in this embodiment of this application, the electronic device performs both super-resolution processing and high dynamic range imaging processing on the color image in the YUV color space, to improve the image enhancement effect.

In a possible design, the component coefficient corresponding to the U channel is the same as the component coefficient corresponding to the V channel, to avoid color deviation.

In a possible design, the NPU in the electronic device performs super-resolution processing on the first Y-channel component input to a two-branch multitask neural network model, to output the second Y-channel component; and the NPU in the electronic device performs high dynamic range imaging processing on the color image input to the two-branch multitask neural network model, to output the component coefficients respectively corresponding to the first Y-channel component, the first U-channel component, and the first V-channel component. In other words, the NPU may simultaneously perform super-resolution enhancement and high dynamic range imaging enhancement on a video.

In a possible design, the electronic device includes a video decoder. The video decoder is configured to decode an input video stream to generate the color image, where each frame of image in the input video stream is a color image in RGB color space. In other words, in the image enhancement method provided in this embodiment of this application, the foregoing image enhancement processing may be performed on the image obtained after decoding by the decoder.

In a possible design, the electronic device includes a video encoder. After the electronic device obtains the enhanced color image through combination, the video encoder may further encode each frame of enhanced color image, to generate a video stream obtained after image enhancement processing, where each frame of image in the video stream obtained after image enhancement processing is a color image in RGB color space. In other words, in the image enhancement method provided in this embodiment of this application, the encoder may encode the image, in the YUV color space, obtained after image enhancement, and after encoding by the encoder, there is an image in the RGB color space.

According to a second aspect, an embodiment of this application provides an electronic device, including a processor and a memory. The memory is configured to store one or more computer programs. When the one or more computer programs stored in the memory are executed by the processor, the electronic device is enabled to implement the method in any possible design in any one of the foregoing aspects.

According to a third aspect, an embodiment of this application further provides an apparatus. The apparatus includes modules/units that perform the method in any possible design in any one of the foregoing aspects. These modules/units may be implemented by hardware, or may be implemented by hardware by executing corresponding software.

According to a fourth aspect, an embodiment of this application further provides a computer-readable storage medium. The computer-readable storage medium includes a computer program. When the computer program is run on an electronic device, the electronic device is enabled to perform the method in any possible design in any one of the foregoing aspects.

According to a fifth aspect, an embodiment of this application further provides a computer program product. When the computer program product is run on a terminal, the electronic device is enabled to perform the method in any possible design in any one of the foregoing aspects.

According to a sixth aspect, an embodiment of this application further provides a chip. The chip is coupled to a memory, and is configured to execute a computer program stored in the memory, to perform the method in any possible design in any one of the foregoing aspects.

For technical effects that can be achieved by the designs in any one of the second aspect to the sixth aspect, refer to the description of the technical effects that can be respectively achieved by the designs in the first aspect. Details are not described herein.

### BRIEF DESCRIPTION OF DRAWINGS

FIG. 1 is a schematic diagram of a structure of a mobile phone according to an embodiment of this application;
FIG. 2 is a schematic diagram of a structure of an Android operating system according to an embodiment of this application;
FIG. 3 is a schematic diagram of an electronic device according to an embodiment of this application;
FIG. 4 is a schematic diagram of a two-branch multitask neural network model according to an embodiment of this application;
FIG. 5A and FIG. 5B-1 to FIG. 5B-3 are a schematic diagram of an image enhancement method according to an embodiment of this application;
FIG. 6 is a schematic diagram of an example of an image enhancement method according to an embodiment of this application; and
FIG. 7 is a schematic diagram of an image enhancement apparatus according to an embodiment of this application.

### DESCRIPTION OF EMBODIMENTS

To help understand the embodiments of this application, terms related to the embodiments of this application are first described below.
1. Color space: A color is usually described by using three independent attributes. The three independent variables act together to form a spatial coordinate, which is the color space. However, a described color object is objective, and different color space is merely used to measure a same object from different angles. The color space may be classified into two categories: primary color space such as red-green-blue (red, green, blue, RGB) color space, and color space in which chrominance and luminance are separated, for example, YUV color space, where "Y" represents luminance (luminance or luma), namely, a grayscale value, and "V" and "V" represent chrominance (chrominance or chroma), and hue-saturation-value (hue, saturation, value, HSV) color space.
2. Component: Three components in RGB color space may be a red (red) component, a green (green) component, and a blue (blue) component. Three components in YUV color space may be a Y component, a U component, and a V component, where "Y" represents luminance (luminance or luma), namely, a grayscale value, and "U" and "V" represent chrominance (chrominance or chroma).

For a mobile terminal, currently, after obtaining a video stream, the mobile terminal needs to first perform decoding by using a video decoder. A color image obtained after decoding is usually a color image in YUV color space, and is not a color image in RGB color space. In the YUV color space, a Y channel represents luminance of the image in the video stream, and a U channel and a V channel represent a color of the image in the video stream. Usually, a human eye is more sensitive to luminance and less sensitive to a subtle difference in color. Therefore, during processing of a video stream in the YUV color space, it is required that different image enhancement methods should be used for different channels. Based on this analysis, the embodiments of this application provide an image enhancement method. In the method, both super-resolution processing and high dynamic range enhancement processing may be performed on a video stream in YUV color space, and an output image obtained after super-resolution processing and an output image obtained after high dynamic range enhancement processing are combined to generate a final enhanced image, to better improve quality of an image displayed by a mobile terminal.

The method and an apparatus are based on a same technical idea. Because the method and the apparatus have a similar problem-resolving principle, for implementations of the apparatus and the method, refer to each other, and no repeated description is provided.

This application may be applied to a video stream play scenario, for example, play of a video in a mobile phone, play of a video in a video application, or play of multimedia content in a television. The image enhancement method provided in this application may be applied to an electronic device including a central processing unit (central processing unit, CPU) and an embedded neural-network processing unit (neural-network processing unit, NPU). The electronic device includes but is not limited to a portable terminal such as a camera, a video camera, a smart camera, a smart camcorder, an intelligent mobile terminal (for example, a mobile phone (mobile phone) or a tablet computer), or a smart television. The image enhancement method provided in this application may be further applied to a video play device in a video surveillance system, or may be implemented by a cloud server in a video surveillance system. An example embodiment of the portable terminal includes but is not limited to a portable terminal equipped with iOS^{®}, Android^{®}, Microsoft^{®}, or another operating system. The portable terminal may alternatively be, for example, a laptop (Laptop) including a touch-sensitive surface (for example, a touch panel). It should be further understood that in some other embodiments, the terminal may alternatively be a desktop computer including a touch-sensitive surface (for example, a touch panel).

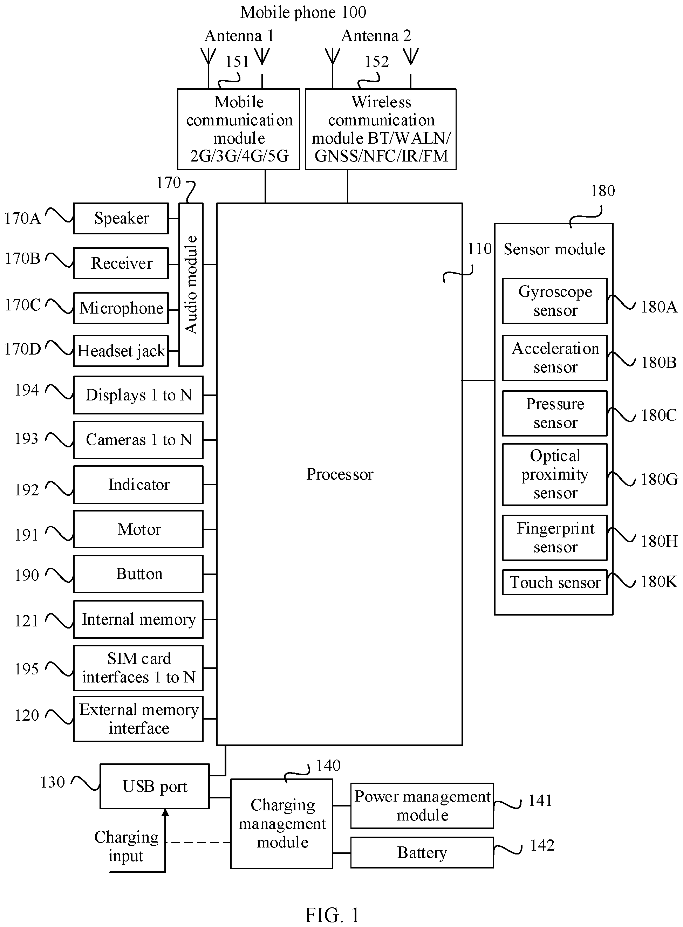

An example in which the electronic device is a mobile phone is used below. FIG. 1 is a schematic diagram of a structure of a mobile phone 100.

The mobile phone 100 may include a processor 110, an external memory interface 120, an internal memory 121, a USB port 130, a charging management module 140, a power management module 141, a battery 142, an antenna 1, an antenna 2, a mobile communication module 151, a wireless communication module 152, an audio module 170, a speaker 170A, a receiver 170B, a microphone 170C, a headset jack 170D, a sensor module 180, a button 190, a motor 191, an indicator 192, a camera 193, a display screen 194, a SIM card interface 195, and the like. The sensor module 180 may include a gyroscope sensor 180A, an acceleration sensor 180B, a pressure sensor 180C, a proximity sensor 180G, a fingerprint sensor 180H, and a touch sensor 180K (certainly, the mobile phone 100 may further include other sensors such as a temperature sensor, a distance sensor, a magnetic sensor, an ambient light sensor, a barometric pressure sensor, a bone conduction sensor, and the like, which are not shown in the figure).

It may be understood that the structure shown in this embodiment of the present invention constitutes no specific limitation on the mobile phone 100. In some other embodiments of this application, the mobile phone 100 may include more or fewer components than those shown in the figure, combine some components, split some components, or have different component arrangements. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (Neural-network Processing Unit, NPU). Different processing units may be independent devices, or may be integrated into one or more processors. The controller may be a nerve center and a command center of the mobile phone 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data that has been used or is cyclically used by the processor 110. If the processor 110 needs to use the instructions or the data again, the processor 110 may directly invoke the instructions or the data from the memory. This avoids repeated access, reduces waiting time of the processor 110, and improves system efficiency.

The processor 110 may run the image enhancement method provided in the embodiments of this application, to achieve a better image enhancement effect and resolve a problem, in the conventional technology, that a real-time requirement of a mobile terminal for video processing is not met by using an image quality algorithm. The processor 110 may include different devices. For example, when a CPU and a GPU are integrated, the CPU and the GPU may cooperate to perform the image enhancement method provided in the embodiments of this application. For example, in the image enhancement method, some algorithms are executed by the CPU, and the other algorithms are executed by the GPU, to obtain relatively high processing efficiency.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diode, QLED), or the like. In some embodiments, the mobile phone 100 may include one or N display screens 194, where N is a positive integer greater than 1. In this embodiment of this application, a touch sensor and/or a pressure sensor on the display screen 194 may collect a touch operation performed by a user, and the touch sensor and/or the pressure sensor may transfer detected sensor data to the processor 110, so that the processor 110 determines a status corresponding to a sensor unit.

In this embodiment of this application, the display screen 194 may be an integrated flexible display screen, or may be a display screen that is obtained through splicing and that includes two rigid screens and one flexible screen located between the two rigid screens. After the processor 110 runs the image enhancement method provided in the embodiments of this application, the processor 110 may control an image enhancement effect of a display interface on the display screen 194 based on the image enhancement method.

The camera 193 (a front-facing camera or a rear-facing camera, or a camera that can serve as a front-facing camera and a rear-facing camera) is configured to capture a static image or a video. Usually, the camera 193 may include a photosensitive element such as a lens group and an image sensor. The lens group includes a plurality of lenses (convex lens or concave lens), and is configured to: collect an optical signal reflected by a to-be-photographed object, and transfer the collected optical signal to the image sensor. The image sensor generates an original image of the to-be-photographed object based on the optical signal.

The internal memory 121 may be configured to store computer-executable program code. The executable program code includes instructions. The processor 110 implements various function applications and data processing of the mobile phone 100 by running the instructions stored in the internal memory 121. The internal memory 121 may include a program storage area and a data storage area. The program storage area may store an operating system, code of an application (for example, a camera application or a WeChat application), and the like. The data storage area may store data created in a process of using the mobile phone 100 (for example, data collected by the sensor and a preset reference state sequence set).

The internal memory 121 may further store code of an image enhancement algorithm provided in the embodiments of this application. When the code of the image enhancement algorithm stored in the internal memory 121 is run by the processor 110, the processor 110 may control the display interface on the display screen 194.

In addition, the internal memory 121 may include a high-speed random access memory, and may further include a nonvolatile memory, for example, at least one magnetic disk storage device, a flash storage device, or a universal flash storage (universal flash storage, UFS).

Certainly, the code of the image enhancement algorithm provided in the embodiments of this application may be alternatively stored in an external memory. In this case, the processor 110 may run, by using the external memory interface 120, the code of the image enhancement algorithm stored in the external memory. The processor 110 determines an enhanced image of an electronic device, and then controls the display interface on the display screen 194 based on the enhanced image.

Functions of the sensor module 180 are described below.

The gyroscope sensor 180A may be configured to determine a motion posture of the mobile phone 100. In some embodiments, the gyroscope sensor 180A may be used to determine angular velocities of the mobile phone 100 around three axes (namely, axes x, y, and z). That is, the gyroscope sensor 180A may be configured to detect a current motion state of the mobile phone 100. For example, the mobile phone 100 jitters or is static. Alternatively, for example, the mobile phone 100 is in a portrait mode or a landscape mode.

When the display screen in this embodiment of this application is a foldable screen, the gyroscope sensor 180A may be configured to detect a folding operation or an unfolding operation that acts on the display screen 194. The gyroscope sensor 180A may report the detected folding operation or unfolding operation to the processor 110 as an event, to determine a folded state or an unfolded state of the display screen 194.

The acceleration sensor 180B may detect a magnitude of acceleration of the mobile phone 100 in various directions (usually on three axes). When the display screen in this embodiment of this application is a foldable screen, the acceleration sensor 180B may be configured to detect a folding operation or an unfolding operation that acts on the display screen 194. The acceleration sensor 180B may report the detected folding operation or unfolding operation to the processor 110 as an event, to determine a folded state or an unfolded state of the display screen 194.

The pressure sensor 180C is configured to sense a pressure signal, and can convert the pressure signal into an electrical signal. In some embodiments, the pressure sensor 180B may be disposed on the display screen 194 or a housing part. There are a plurality of types of pressure sensors 180B, such as a resistive pressure sensor, an inductive pressure sensor, and a capacitive pressure sensor. The capacitive pressure sensor may include at least two parallel plates made of conductive materials. When a force is applied to the pressure sensor 180B, capacitance between electrodes changes. The mobile phone 100 determines force strength based on a change of the capacitance. When a touch operation acts on the display screen 194, the mobile phone 100 detects strength of the touch operation based on the pressure sensor 180B. The mobile phone 100 may further calculate a touch position based on a detected signal of the pressure sensor 180B. In some embodiments, touch operations that are performed at a same touch location but have different touch operation intensity may correspond to different operation instructions. For example, when a touch operation whose strength is greater than a first pressure threshold acts on both sides of a housing, an instruction for viewing an unread message is executed.

The optical proximity sensor 180G may include a light-emitting diode (LED) and an optical detector, for example, a photodiode. The light-emitting diode may be an infrared light-emitting diode. The mobile phone emits infrared light by using the light-emitting diode. The mobile phone detects infrared reflected light from a nearby object by using the photodiode. When sufficient reflected light is detected, it may be determined that there is an object near the mobile phone. When insufficient reflected light is detected, the mobile phone may determine that there is no object near the mobile phone. When the display screen in this embodiment of this application is a non-foldable screen, the proximity sensor 180G may be disposed on an upper side of the display screen 194, and the proximity sensor 180G may detect, based on an optical path difference of an infrared signal, whether there is a face that approaches the screen. When the display screen in this embodiment of this application is a foldable screen, the proximity sensor 180G may be disposed on a first screen of the foldable display screen 194, and the proximity sensor 180G may detect, based on an optical path difference of an infrared signal, an angle at which the first screen and a second screen area folded or unfolded.

The fingerprint sensor 180H is configured to collect a fingerprint. The mobile phone 100 may use a feature of the collected fingerprint to implement fingerprint-based unlocking, application lock access, fingerprint-based photographing, fingerprint-based call answering, and the like.

The touch sensor 180K is also referred to as a "touch panel". The touch sensor 180K may be disposed on the display 194 or a housing part, and the touch sensor 180K and the display 194 form a touchscreen. The touch sensor 180K is configured to detect a touch operation performed on or near the touch sensor. The touch sensor may transfer detected sensor data to the processor 110, so that the processor 110 determines a status of the sensor unit based on the sensor data, and then determines a state sequence corresponding to the sensor unit in the electronic device. A visual output related to the touch operation may be provided through the display 194. In some other embodiments, the touch sensor 180K may alternatively be disposed on a surface of the mobile phone 100 at a location different from a location of the display 194.

For example, a home screen is displayed on the display screen 194 of the mobile phone 100, and the home screen includes icons of a plurality of applications (for example, a camera application and a WeChat application). The user taps an icon of the camera application on the home screen by using the touch sensor 180K, to trigger the processor 110 to start the camera application and turn on the camera 193. An interface, for example, a viewfinder interface, of the camera application is displayed on the display screen 194.

A wireless communications function of the mobile phone 100 may be implemented by using the antenna 1, the antenna 1, the mobile communication module 151, the wireless communication module 152, the modem processor, the baseband processor, and the like.

The antenna 1 and the antenna 2 are configured to transmit and receive an electromagnetic wave signal. Each antenna in the mobile phone 100 may be configured to cover one or more communication bands. Different antennas may be further multiplexed, to improve antenna utilization. For example, the antenna 1 may be multiplexed as a diversity antenna in a wireless local area network. In some other embodiments, an antenna may be used in combination with a tuning switch.

The mobile communication module 151 may provide a solution to wireless communication such as 2G/3G/4G/5G applied to the mobile phone 100. The mobile communication module 151 may include at least one filter, a switch, a power amplifier, a low noise amplifier (low noise amplifier, LNA), and the like. The mobile communication module 151 may receive an electromagnetic wave through the antenna 1, perform processing such as filtering or amplification on the received electromagnetic wave, and transmit the electromagnetic wave to the modem processor for demodulation. The mobile communication module 151 may further amplify a signal modulated by the modem processor, and convert the signal into an electromagnetic wave for radiation through the antenna 1. In some embodiments, at least some functional modules of the mobile communication module 151 may be disposed in the processor 110. In some embodiments, at least some functional modules of the mobile communication module 151 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The baseband processor processes the low-frequency baseband signal, and then transfers an obtained signal to the application processor. The application processor outputs a sound signal by using an audio device (which is not limited to the speaker 170A, the receiver 170B, and the like), or displays an image or a video on the display 194. In some embodiments, the modem processor may be an independent component. In some other embodiments, the modem processor may be independent of the processor 110, and is disposed in the same device as the mobile communication module 151 or another functional module.

The wireless communication module 152 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, or the like and that is applied to the mobile phone 100. The wireless communication module 152 may be one or more components integrating at least one communications processor module. The wireless communication module 152 receives an electromagnetic wave through the antenna 2, performs frequency modulation and filtering processing on an electromagnetic wave signal, and sends a processed signal to the processor 110. The wireless communication module 152 may further receive a to-be-sent signal from the processor 110, perform frequency modulation and amplification on the signal, and convert the signal into an electromagnetic wave for radiation through the antenna 2.

In addition, the mobile phone 100 may implement an audio function such as music playing or recording by using the audio module 170, the speaker 170A, the receiver 170B, the microphone 170C, the headset jack 170D, the application processor, and the like. The mobile phone 100 may receive an input from the button 190, and generate a button signal input related to user settings and function control of the mobile phone 100. The mobile phone 100 may generate a vibration prompt (for example, an incoming call vibration prompt) by using the motor 191. The indicator 192 in the mobile phone 100 may be an indicator light, and may be configured to indicate a charging status and a power change, or may be configured to indicate a message, a missed call, a notification, and the like. The SIM card interface 195 in the mobile phone 100 is configured to be connected to a SIM card. The SIM card may be inserted into the SIM card interface 195 or removed from the SIM card interface 195, to implement contact with and separation from the mobile phone 100.

It should be understood that in actual application, the mobile phone 100 may include more or fewer components than those shown in FIG. 1. This is not limited in this embodiment of this application. The mobile phone 100 shown in the figure is merely an example, and the mobile phone 100 may include more or fewer components than those shown in the figure, and may combine two or more components or have different component configurations. The components shown in the figure may be implemented in hardware that includes one or more signal processors and/or application-specific integrated circuits, in software, or in a combination of hardware and software.

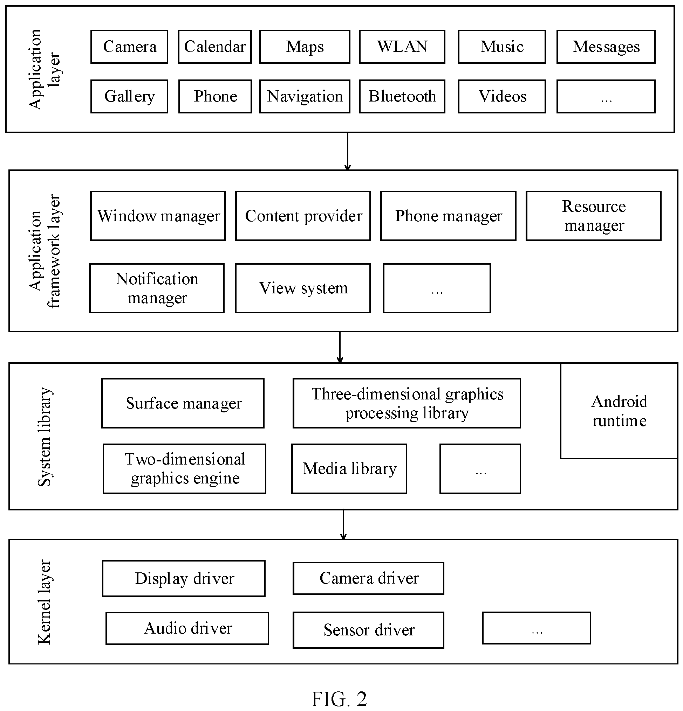

A software system of the electronic device may use a layered architecture, an event-driven architecture, a microkernel architecture, a micro service architecture, or a cloud architecture. In this embodiment of the present invention, an Android system of a layered architecture is used as an example to illustrate the software structure of the electronic device. FIG. 2 is a block diagram of a software structure of the electronic device according to an embodiment of the present invention.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 2, the application package may include applications such as Phone, Camera, Gallery, Calendar, Call, Map, Navigation, WLAN, Bluetooth, Music, Video, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to store and obtain data, and enable the data to be accessed by an application. The data may include a video, an image, audio, calls that are made and received, a browsing history and bookmarks, a phone book, and the like.

The view system includes visual controls, such as a control for displaying a text and a control for displaying an image. The view system may be configured to construct an application. A display interface may include one or more views. For example, a display interface including a notification icon of Messages may include a text display view and a picture display view.

The phone manager is configured to provide a communication function of the electronic device, for example, management of a call status (including answering, declining, or the like).

The resource manager provides, for an application, various resources such as a localized character string, an icon, a picture, a layout file, and a video file.

The notification manager enables an application to display notification information in the status bar, and may be configured to transmit a notification-type message. The displayed information may automatically disappear after a short pause without user interaction. For example, the notification manager is configured to notify download completion, provide a message notification, and the like. The notification manager may alternatively be a notification that appears in a top status bar of the system in a form of a graph or a scroll bar text, for example, a notification of an application running on the background or a notification that appears on a screen in a form of a dialog window. For example, text information is displayed in the status bar, an announcement is given, the electronic device vibrates, or the indicator light blinks.

The Android runtime includes a kernel library and a virtual machine. The Android runtime is responsible for scheduling and management of the Android system.

The kernel library includes two parts: a function that needs to be called in Java language, and a kernel library of Android.

The application layer and the application framework layer run on a virtual machine. The virtual machine executes Java files at the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playing and recording of a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver. The hardware may refer to various types of sensors, for example, an acceleration sensor, a gyroscope sensor, a touch sensor, and a pressure sensor in the embodiments of this application.

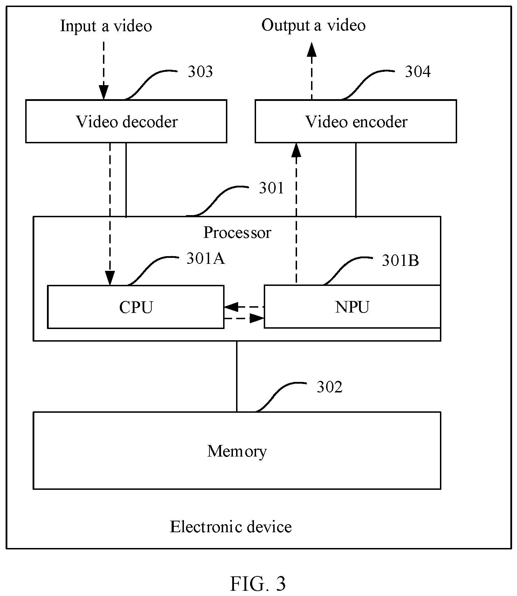

Referring to FIG. 3, the electronic device in this embodiment of this application may include at least one processor 301, a memory 302, a video encoder 304, and a video decoder 303. The processor 301 may include a CPU 301A and an NPU 301B. The processor 301 may refer to the processor 110 in FIG. 1, and the memory 302 may refer to the internal memory 121 in FIG. 1.

With reference to FIG. 3, the image enhancement method provided in this application includes the following process: (1) The video decoder 303 first decodes an input video stream in RGB color space, to obtain one or more frames of input images in YUV color space. (2) Subsequently, the one or more frames of input images in the YUV color space are transferred to the CPU 301A for data preprocessing. (3) An image obtained after processing by the CPU 301A is transferred to a two-branch multitask neural network model in the NPU 301B for processing. (4) After processing is performed by the neural network model, a super-resolution (super resolution, SR) image obtained after super-resolution processing and a component coefficient obtained after high dynamic range imaging processing are obtained, and the SR image and the component coefficient are transferred back to the CPU 301A to execute a post-processing thread, to obtain a final enhanced image through combination. (5) The enhanced image is transferred to the video encoder 304 by using the NPU 301B, and the video encoder 304 encodes the enhanced image into a video stream in the RGB color space, and then outputs the video stream.

The two-branch multitask neural network model in the NPU 301B is generated through pre-training. The two-branch multitask neural network model includes two branches. A first branch corresponds to a super-resolution processing task, and a second branch corresponds to a high dynamic range imaging processing task. The super-resolution processing task and the high dynamic range imaging processing task may be executed in parallel.

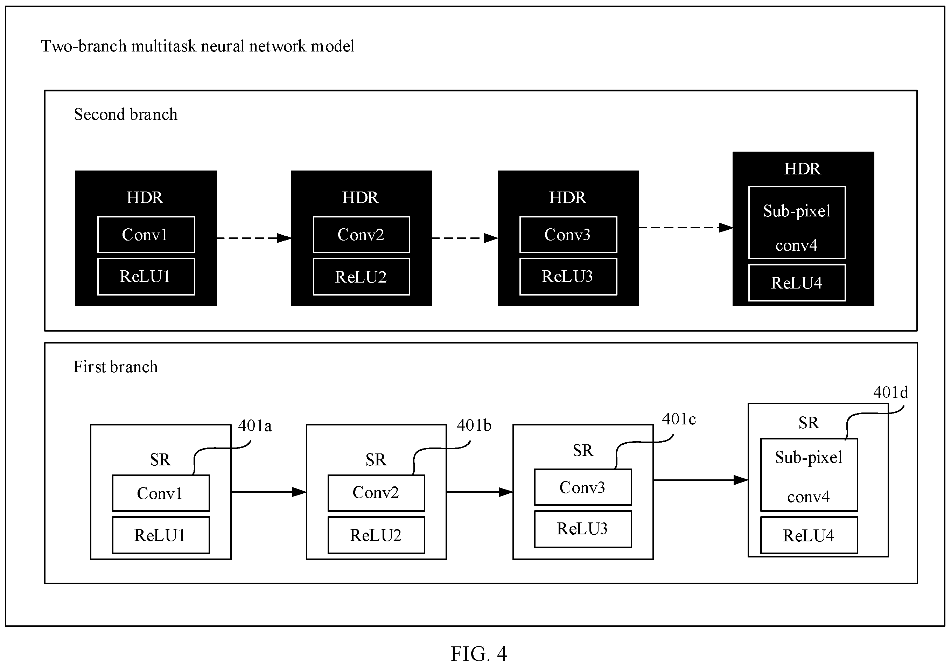

As shown in FIG. 4, the first branch in the two-branch multitask neural network model may include four convolutional layers and four ReLU (activation) layers, and the first branch is configured to perform super-resolution processing on an input color image. A fourth convolutional layer is a sub-pixel convolutional layer, which means that an output at this layer is to be up-sampled to target resolution. At a first convolutional layer 401a in the first branch, a feature dimension is extended, for example, extended from 3 to 32, and at a subsequent second convolutional layer 401b and a subsequent third convolutional layer 401c, a local feature of each pixel is extracted from a feature map. The fourth sub-pixel convolutional layer 401d is used to up-sample the feature map, to enlarge the feature map to the target resolution. An output result at the fourth sub-pixel convolutional layer 401d is activated by the ReLU (activation) layer, to ensure that a value of each pixel is greater than 0.

In addition, the second branch in the two-branch multitask neural network model may include four convolutional layers and four ReLU (activation) layers. The second branch is configured to perform high dynamic range imaging processing on the input color image. A fourth convolutional layer is a sub-pixel convolutional layer. The second branch trains a network to predict a weight mask map instead of directly predicting the value of each pixel.

In addition, the electronic device may further include one or more of the following: a general-purpose processor, an image signal processor (image signal processor, ISP), a microprocessor, a digital signal processor (digital signal processor, DSP), a field-programmable gate array (field-programmable gate array, FPGA), and the like.

For example, the memory 302 in the electronic device may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (Electrically Erasable Programmable Read-Only Memory, EEPROM), a compact disc read-only memory (Compact Disc Read-Only Memory, CD-ROM) or another optical disk storage, an optical disc storage (including a compact disc, a laser disc, an optical disc, a digital versatile disc, a Blu-ray disc, or the like), a disk storage medium or another magnetic storage device, or any other medium that can be used to carry or store expected program code in a form of instructions or a data structure and that can be accessed by the apparatus. However, the memory 302 is not limited thereto. The memory may exist alone, and is connected to the processor 301 by using a bus (as shown in FIG. 3). Alternatively, the memory may be integrated with the processor 301.

The memory 302 may be configured to store application program code for executing the solutions of this application, and execution is controlled by the processor 301. In other words, the processor is configured to execute the program code stored in the memory 302 to implement the image enhancement method in the embodiments of this application.

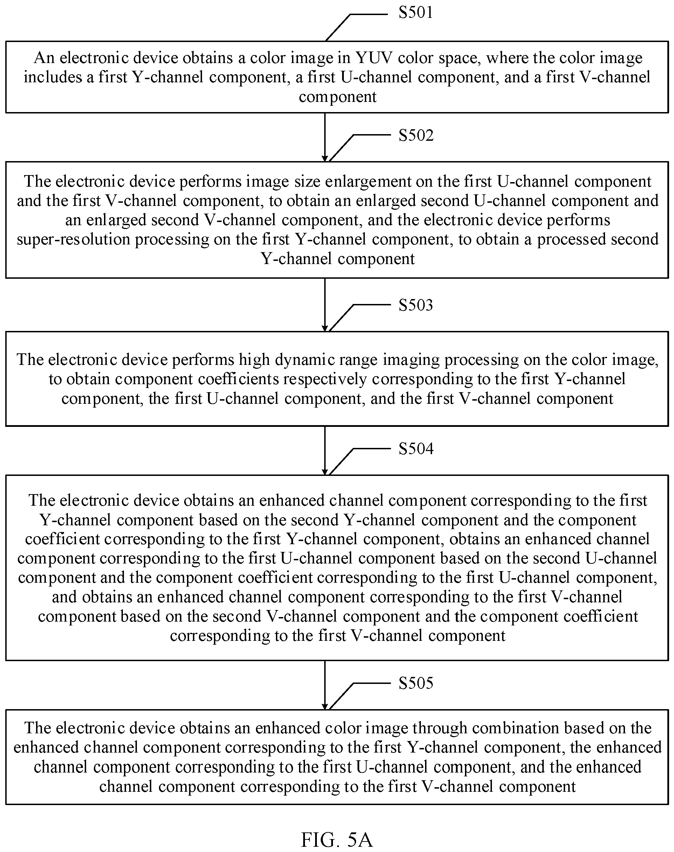

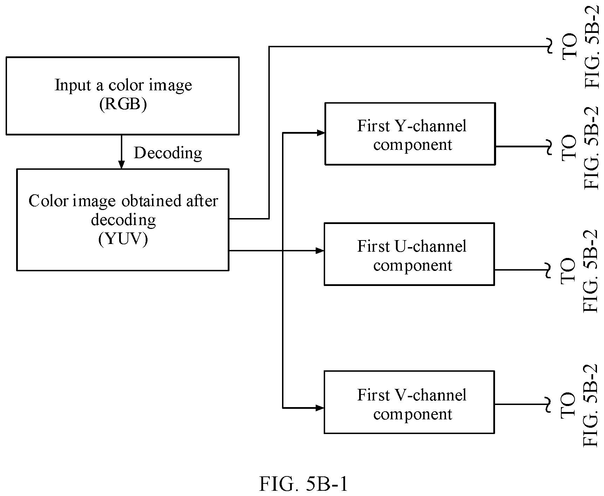

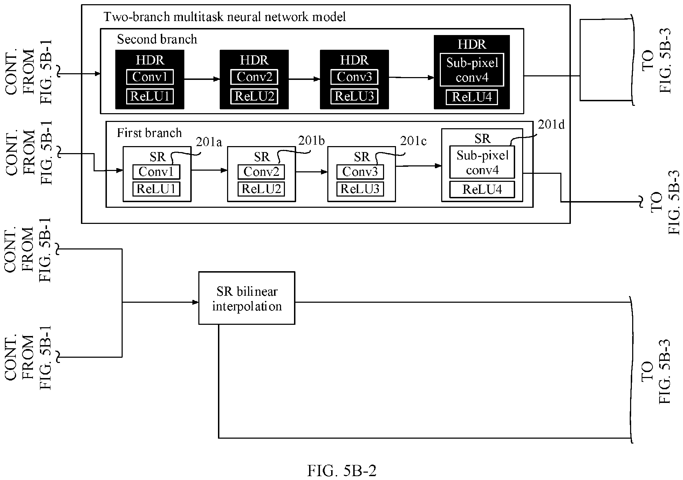

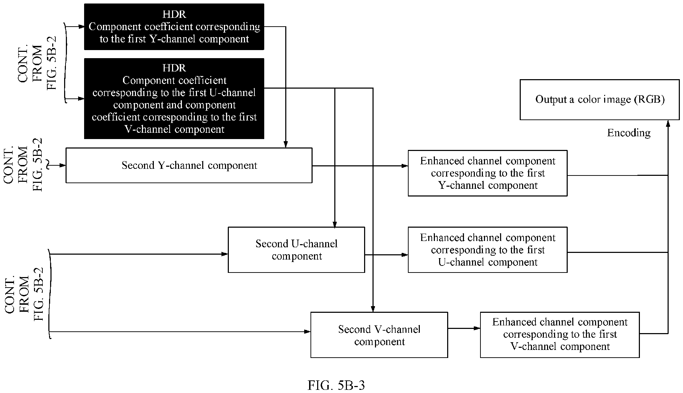

The image enhancement method provided in the embodiments of this application is first described below in detail. The image enhancement method may be implemented by an image enhancement apparatus in an electronic device, and the image enhancement apparatus may be integrated into program code of the electronic device as a plug-in. For a specific method, refer to FIG. 5A and FIG. 5B-1 to FIG. 5B-3.

Step 501: The electronic device obtains a color image in YUV color space.

The color image includes a first Y-channel component, a first U-channel component, and a first V-channel component.

In a possible example, an input image of the electronic device is a color image in RGB color space, and a video decoder in the electronic device needs to decode an input video stream, to generate the color image. For example, when a video application in the electronic device receives a play request from a user, the electronic device obtains a video stream from a video server corresponding to the video application. Each frame of color image in the video stream is a color image in the RGB color space. As shown in FIG. 5B-1 to FIG. 5B-3, an input color image is a color image in the RGB color space, and the video decoder in the electronic device performs video decoding on a video stream from a network side. Each frame of color image obtained after decoding is a color image in the YUV color space.

Step 502: The electronic device performs image size enlargement on the first U-channel component and the first V-channel component, to obtain a processed second U-channel component and a processed second V-channel component, and the electronic device performs super-resolution processing on the first Y-channel component, to obtain a processed second Y-channel component.

In this step, the electronic device may simultaneously scale, by using a bilinear interpolation algorithm, the first U-channel color component and the first V-channel color component in the color image, in the YUV color space, obtained after decoding. With reference to FIG. 5B-1 to FIG. 5B-3, a CPU in the electronic device may simultaneously enlarge, by using the bilinear interpolation algorithm, the first U-channel color component and the first V-channel color component in the color image obtained after decoding, to obtain the enlarged second U-channel component and the enlarged second V-channel component.

Based on a consideration that a human eye is more sensitive to a change in luminance than to a change in color, in this embodiment of this application, in an image enhancement processing process, the electronic device separately performs super-resolution processing on the first Y-channel component. With reference to FIG. 5B-1 to FIG. 5B-3, a two-branch multitask neural network model in an NPU in the electronic device separately performs super-resolution processing on the Ychannel component in the input color image, to implement targeted optimization on the image for a characteristic of the YUV color space.

Step 503: The electronic device performs high dynamic range imaging processing on the color image, to obtain component coefficients respectively corresponding to the first Y-channel component, the first U-channel component, and the first V-channel component.

It should be noted that in this embodiment of this application, the component coefficient is also referred to as a weight mask map, a value range of the component coefficient may be from 0 to 1, and component coefficients of channels respectively represent variation coefficients of values of pixels on a Y channel, a U channel, and a V channel. The variation coefficient of the value of the pixel is obtained as follows: A difference between a target component of a pixel on any channel and a component of the current image is calculated, and then a ratio of an absolute value of the difference to a target component is used as a variation coefficient of a value of the pixel, in other words, used as a component coefficient.

With reference to FIG. 5B-1 to FIG. 5B-3, the two-branch multitask neural network model in the NPU in the electronic device performs high dynamic range imaging processing on the input color image, to obtain the component coefficient corresponding to the first Y-channel component, the component coefficient corresponding to the first U-channel component, and the component coefficient corresponding to the first V-channel component.

It should be noted that in a possible embodiment, for the same frame of color image, step 502 and step 503 may be performed in parallel, that is, the CPU in the electronic device enlarges the first U-channel component and the first V-channel component, to obtain the enlarged second U-channel component and the enlarged second V-channel component, and the two-branch multitask neural network model in the NPU in the electronic device performs super-resolution processing on the first Ychannel component in the input color image; and the two-branch multitask neural network model in the NPU in the electronic device performs high dynamic range imaging processing on the input color image, to obtain the component coefficient corresponding to the first Y-channel component, the component coefficient corresponding to the first U-channel component, and the component coefficient corresponding to the first V-channel component. In this way, image processing efficiency can be further improved, to meet a real-time requirement of a mobile terminal for video processing.

A first branch and a second branch in the two-branch multitask neural network model in the NPU are capable of performing processing in parallel. Therefore, the two-branch multitask neural network model in the NPU in the electronic device performs super-resolution processing on the first Y-channel component in the input color image, and the two-branch multitask neural network model in the NPU in the electronic device performs high dynamic range imaging processing on the input color image, to obtain the component coefficient corresponding to the first Y-channel component, the component coefficient corresponding to the first U-channel component, and the component coefficient corresponding to the first V-channel component. In this way, based on the fact that the CPU and the NPU perform processing in parallel, the image processing efficiency can be further improved, to meet the real-time requirement of the mobile terminal for video processing.

Step 504: The electronic device obtains an enhanced channel component corresponding to the first Y-channel component based on the second Y-channel component and the component coefficient corresponding to the first Y-channel component, obtains an enhanced channel component corresponding to the first U-channel component based on the second U-channel component and the component coefficient corresponding to the first U-channel component, and obtains an enhanced channel component corresponding to the first V-channel component based on the second V-channel component and the component coefficient corresponding to the first V-channel component.

Specifically, for the Y channel, the electronic device may multiply the component coefficient corresponding to the first Y-channel component by the second Y-channel component, to obtain the enhanced channel component corresponding to the first Y-channel component. That is, the electronic device obtains a color value of the Y channel based on a weight mask map of the Y channel predicted by the two-branch multitask neural network model in the NPU and an up-sampling result, on the Y channel, of a pixel value output by the two-branch multitask neural network model. With reference to FIG. 5B-1 to FIG. 5B-3, the enhanced channel component corresponding to the first Y-channel component meets the following condition: Y' = W*_{Y}* × Y, where Y' represents the enhanced channel component corresponding to the first Y-channel component, W*_{Y}* represents the component coefficient corresponding to the first Y-channel component, and Y represents the second Y-channel component.

In addition, for the U channel, the enhanced channel component corresponding to the first U-channel component meets the following condition: U' = W*_{U}* × (U - ϕ₁) + ϕ₂, where U' represents the enhanced channel component corresponding to the first U-channel component, W*_{U}* represents the component coefficient corresponding to the first U-channel component, U represents the second U-channel component, ϕ₁ is a fixed parameter, ϕ₂ is a fixed parameter, and a value range of ϕ₁ and ϕ₂ is [0, 1].

In addition, for the V channel, the enhanced channel component corresponding to the first V-channel component meets the following condition: V' = W*_{V}* × (V - ϕ₁) + ϕ₂, where V' represents the enhanced channel component corresponding to the first V-channel component, W*_{V}* represents the component coefficient corresponding to the first V-channel component, V represents the second V-channel component, ϕ₁ is a fixed parameter, ϕ₂ is a fixed parameter, and a value range of ϕ₁ and ϕ₂ is [0, 1].

In this embodiment of this application, to avoid color deviation between the enhanced component corresponding to the U channel and the enhanced component corresponding to the V channel, values of W*_{U}* and W*_{V}* may be set to be the same in this embodiment of this application.

Step 505: The electronic device obtains an enhanced color image through combination based on the enhanced channel component corresponding to the first Y-channel component, the enhanced channel component corresponding to the first U-channel component, and the enhanced channel component corresponding to the first V channel.

In other words, the electronic device performs calculation based on the component coefficient predicted by the NPU and the component that corresponds to each channel and that is obtained after super-resolution processing, to obtain the enhanced color image in the YUV color space through combination.

In a possible example, a video encoder in the electronic device may further encode each frame of enhanced color image, to obtain a video stream obtained after image enhancement processing. Color images in the video stream obtained after image enhancement processing are color images in the RGB color space. For example, when the video application in the electronic device receives a play request from the user, the electronic device may obtain a video stream from the video server corresponding to the video application. After the electronic device performs the image enhancement processing on the video stream, encoding is performed by the video encoder. A final output color image in the RGB color space may be displayed on a display.

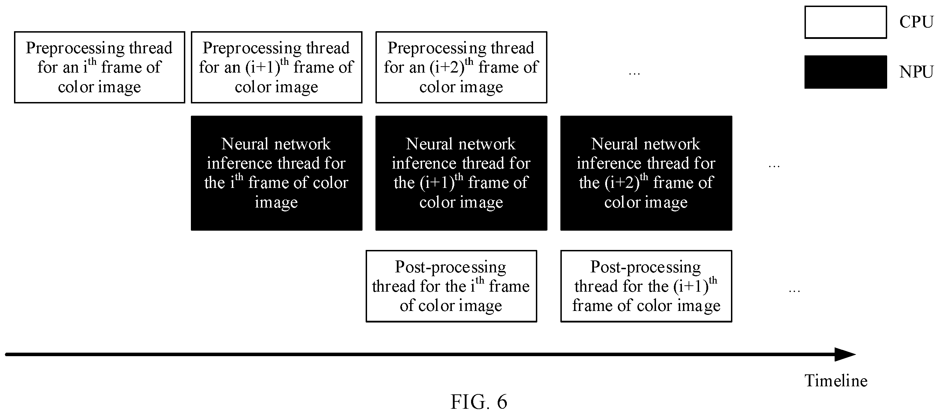

In the enhancement method provided in this embodiment of this application, a manner in which the CPU and a GPU perform processing in parallel may be used to improve the image processing efficiency. Details are shown in FIG. 6. Two threads, namely, a preprocessing thread and a post-processing thread, are set for the CPU in the electronic device in this embodiment of this application. A neural network inference thread is set for the NPU in the electronic device in this embodiment of this application. Data is processed in parallel in the three threads, to speed up calculation. With reference to FIG. 6, for an i^{th} frame of color image obtained after the video stream is decoded, the following operation is performed in the preprocessing thread for the CPU in the electronic device: Enlargement processing shown in step 502 is performed on the i^{th} frame of color image. Then, the following operation is performed in the neural network inference thread for the NPU in the electronic device: Super-resolution processing shown in step 502 and high dynamic range imaging processing shown in step 503 are performed on the i^{th} frame of color image. Then, the following operation is performed in the post-processing thread for the CPU in the electronic device: The calculation process shown in step 504 and the process that is of obtaining the enhanced image through combination and that is shown in step 505 are performed on the i^{th} frame of color image. As shown in FIG. 6, when the NPU performs the processing process, the following operation may be simultaneously performed in the preprocessing thread for the CPU: Enlargement processing shown in step 502 is performed on an (i+1)^{th} frame of color image, and when the processing process is performed in the post-processing thread for the CPU in the electronic device, the following operation may be simultaneously performed in the neural network inference thread for the NPU in the electronic device: Super-resolution processing shown in step 502 and high dynamic range imaging processing shown in step 503 are performed on the (i+1)^{th} frame of color image. By analogy, the CPU and the NPU perform calculation in parallel. Therefore, in the present invention, a video can be processed in real time on a processor (including a CPU and an NPU) of a mobile terminal, to improve picture quality of the video without occupying more network bandwidths.

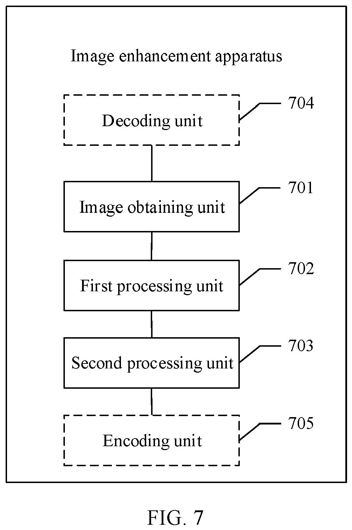

Based on a same technical concept as the method, an embodiment of this application further provides an image enhancement apparatus. Referring to FIG. 7, the image enhancement apparatus may include an image obtaining unit 701, configured to obtain a color image in YUV color space; a first processing unit 702, configured to scale a first U-channel component and a first V-channel component, to obtain an enlarged second U-channel component and an enlarged second V-channel component; and a second processing unit 703, configured to: perform super-resolution processing on a first Y-channel component, to obtain a processed second Y-channel component; and perform high dynamic range imaging processing on the color image, to obtain component coefficients respectively corresponding to the first Y-channel component, the first U-channel component, and the first V-channel component. The first processing unit 702 is further configured to: obtain an enhanced channel component corresponding to the first Y-channel component based on the second Y-channel component and the component coefficient corresponding to the first Y-channel component, obtain an enhanced channel component corresponding to the first U-channel component based on the second U-channel component and the component coefficient corresponding to the first U-channel component, and obtain an enhanced channel component corresponding to the first V-channel component based on the second V-channel component and the component coefficient corresponding to the first V-channel component; and obtain an enhanced color image through combination based on the enhanced channel component corresponding to the first Y-channel component, the enhanced channel component corresponding to the first U-channel component, and the enhanced channel component corresponding to the first V channel.

In a possible embodiment, the enhanced channel component corresponding to the first Y-channel component meets the following condition: Y' = W*_{Y}* × Y, where Y' represents the enhanced channel component corresponding to the first Y-channel component, W*_{Y}* represents the component coefficient corresponding to the first Y-channel component, and Y represents the second Y-channel component;
the enhanced channel component corresponding to the first U-channel component meets the following condition: U' = W*_{U}* × (U - ϕ₁) + ϕ₂, where U' represents the enhanced channel component corresponding to the first U-channel component, W*_{U}* represents the component coefficient corresponding to the first U-channel component, U represents the second U-channel component, ϕ₁ is a fixed parameter, ϕ₂ is a fixed parameter, and a value range of ϕ₁ and ϕ₂ is [0, 1]; and
the enhanced channel component corresponding to the first V-channel component meets the following condition: V' = W*_{V}* × (V - ϕ₁) + ϕ₂, where V' represents the enhanced channel component corresponding to the first V-channel component, W*_{V}* represents the component coefficient corresponding to the first V-channel component, V represents the second V-channel component, ϕ₁ is a fixed parameter, ϕ₂ is a fixed parameter, and a value range of ϕ₁ and ϕ₂ is [0, 1].

In a possible embodiment, the component coefficient corresponding to the first U-channel component is the same as the component coefficient corresponding to the first V channel.

In a possible embodiment, the apparatus further includes a decoding unit 704, specifically configured to decode an input video stream, to generate the color image in the YUV color space. Each frame of image in the input video stream is a color image in RGB color space.

In a possible embodiment, the apparatus further includes an encoding unit 705, specifically configured to: after the first processing unit 702 obtains the enhanced color image through combination, encode each frame of enhanced color image, to generate a video stream obtained after image enhancement. Each frame of image in the video stream obtained after image enhancement is a color image in RGB color space.

It should be noted that, in embodiments of this application, division into the units is an example, and is merely logical function division. During actual implementation, another division manner may be used. In addition, functional units in embodiments of this application may be integrated into one processing unit, or each of the units may exist alone physically, or two or more units are integrated into one unit. The integrated unit may be implemented in a form of hardware, or may be implemented in a form of a software function unit.

A person skilled in the art should understand that the embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application. This application is intended to cover these modifications and variations of this application provided that they fall within the scope of protection defined by the following claims.

## Claims

1. An image enhancement method, comprising:
obtaining (S501), by an electronic device, a color image, wherein the color image comprises a first Y-channel component, a first U-channel component, and a first V-channel component;
performing (S502), by the electronic device, image size enlargement on the first U-channel component and the first V-channel component, to obtain a processed second U-channel component and a processed second V-channel component, and performing super-resolution processing on the first Y-channel component, to obtain a processed second Y-channel component;
performing (S503), by the electronic device, high dynamic range imaging processing on the color image, to obtain weight mask maps respectively corresponding to the first Y-channel component, the first U-channel component, and the first V-channel component;
obtaining (S504), by the electronic device, an enhanced channel component corresponding to the first Y-channel component based on the second Ychannel component and the weight mask map corresponding to the first Y-channel component, obtaining an enhanced channel component corresponding to the first U-channel component based on the second U-channel component and the weight mask map corresponding to the first U-channel component, and obtaining an enhanced channel component corresponding to the first V-channel component based on the second V-channel component and the weight mask map corresponding to the first V-channel component; and
obtaining (S505), by the electronic device, an enhanced color image through combination based on the enhanced channel component corresponding to the first Y-channel component, the enhanced channel component corresponding to the first U-channel component, and the enhanced channel component corresponding to the first V-channel component,
wherein the electronic device comprises an embedded neural-network processing unit NPU and a central processing unit CPU, and a two-branch multitask neural network model is integrated into the NPU;
wherein the performing super-resolution processing on the first Y-channel component involves: performing, by a first branch of the two-branch multitask neural network in the NPU of the electronic device, super-resolution processing on the first Y-channel component input to the two-branch multitask neural network model, to output the second Ychannel component;
wherein the performing image size enlargement on the first U-channel component and the first V-channel component involves: performing, by the CPU of the electronic device, image size enlargement on the first U-channel component and the first V-channel component, to obtain the processed second U-channel component and second V-channel component; and
wherein the performing high dynamic range imaging processing on the color image involves: performing, by a second branch of the two-branch multitask neural network in the NPU of the electronic device, high dynamic range imaging processing on the color image input to the two-branch multitask neural network model, to output the weight mask maps respectively corresponding to the first Y-channel component, the first U-channel component, and the first V-channel component.

2. The method according to claim 1, wherein
the enhanced channel component corresponding to the first Y-channel component meets the following condition: Y' = W*_{Y}* × Y, wherein Y' represents the enhanced channel component corresponding to the first Y-channel component, W*_{Y}* represents the weight mask map corresponding to the first Y-channel component, and Y represents the second Y-channel component;
the enhanced channel component corresponding to the first U-channel component meets the following condition: U' = W*_{U}* × (U - ϕ₁) + ϕ₂, wherein U' represents the enhanced channel component corresponding to the first U-channel component, W*_{U}* represents the weight mask map corresponding to the first U-channel component, U represents the second U-channel component, ϕ₁ is a fixed parameter, ϕ₂ is a fixed parameter, and a value range of ϕ₁ and ϕ₂ ranges is [0, 1]; and
the enhanced channel component corresponding to the first V-channel component meets the following condition: V' = W*_{V}* × (V - ϕ₁) + ϕ₂, wherein V' represents the enhanced channel component corresponding to the first V-channel component, W*_{V}* represents the weight mask map corresponding to the first V-channel component, V represents the second V-channel component, ϕ₁ is a fixed parameter, ϕ₂ is a fixed parameter, and a value range of ϕ₁ and ϕ₂ is [0, 1].

3. The method according to claim 1 or 2, wherein the weight mask map corresponding to the first U-channel component is the same as the weight mask map corresponding to the first V channel.

4. The method according to any one of claims 1 to 3, wherein the obtaining (S501), by an electronic device, a color image comprises:
decoding, by a video decoder of the electronic device, an input video stream to generate the color image, wherein each frame of image in the input video stream is a color image in RGB color space.

5. The method according to any one of claims 1 to 4, wherein after the obtaining (S505), by the electronic device, an enhanced color image through combination, the method further comprises:
encoding, by a video encoder of the electronic device, each frame of enhanced color image, to generate a video stream, wherein each frame of image in the video stream is a color image in RGB color space.

6. An electronic device, wherein the electronic device comprises a processor (301) and a memory (302);
the memory (302) stores a program instruction; and
the processor (301) is configured to run the program instructions stored in the memory (302), to enable the electronic device to perform the following operations:
obtaining a color image, wherein the color image comprises a first Y-channel component, a first U-channel component, and a first V-channel component;
performing image size enlargement on the first U-channel component and the first V-channel component, to obtain a processed second U-channel component and a processed second V-channel component, and performing super-resolution processing on the first Ychannel component, to obtain a processed second Y-channel component;
performing high dynamic range imaging processing on the color image, to obtain weight mask maps respectively corresponding to the first Ychannel component, the first U-channel component, and the first V-channel component;
obtaining an enhanced channel component corresponding to the first Y-channel component based on the second Y-channel component and the weight mask map corresponding to the first Y-channel component, obtaining an enhanced channel component corresponding to the first U-channel component based on the second U-channel component and the weight mask map corresponding to the first U-channel component, and obtaining an enhanced channel component corresponding to the first V-channel component based on the second V-channel component and the weight mask map corresponding to the first V-channel component; and
obtaining an enhanced color image through combination based on the enhanced channel component corresponding to the first Y-channel component, the enhanced channel component corresponding to the first U-channel component, and the enhanced channel component corresponding to the first V-channel component,
wherein the processor (301) comprises an embedded neural-network processing unit NPU (301B) and a central processing unit CPU (301A), and a two-branch multitask neural network model is integrated into the NPU (301B);
the NPU (301B) is configured to run the program instructions stored in the memory (302), to enable the NPU (301B) to perform the following operation:
performing, in a first branch of the two-branch multitask neural network, super-resolution processing on the first Y-channel component input to the two-branch multitask neural network model, to output the second Ychannel component;
the CPU (301A) is configured to run the program instructions stored in the memory (302), to enable the CPU (301A) to perform the following operation:
performing image size enlargement on the first U-channel component and the first V-channel component, to obtain the processed second U-channel component and the processed second V-channel component; and
the NPU (301B) is further configured to run the program instructions stored in the memory (302), to perform, in a second branch of the two-branch multitask neural network, high dynamic range imaging processing on the color image input to the two-branch multitask neural network model, to output the weight mask maps respectively corresponding to the first Y-channel component, the first U-channel component, and the first V-channel component.

7. The electronic device according to claim 6, wherein the enhanced channel component corresponding to the first Ychannel component meets the following condition: Y' = W*_{Y}* × Y, wherein Y' represents the enhanced channel component corresponding to the first Y-channel component, W*_{Y}* represents the weight mask map corresponding to the first Y-channel component, and Y represents the second Y-channel component;
the enhanced channel component corresponding to the first U-channel component meets the following condition: U' = W*_{U}* × (U - ϕ₁) + ϕ₂, wherein U' represents the enhanced channel component corresponding to the first U-channel component, W*_{U}* represents the weight mask map corresponding to the first U-channel component, U represents the second U-channel component, ϕ₁ is a fixed parameter, ϕ₂ is a fixed parameter, and a value range of ϕ₁ and ϕ₂ is [0, 1]; and
the enhanced channel component corresponding to the first V-channel component meets the following condition: V' = W*_{V}* × (V - ϕ₁) + ϕ₂, wherein V' represents the enhanced channel component corresponding to the first V-channel component, W*_{V}* represents the weight mask map corresponding to the first V-channel component, V represents the second V-channel component, ϕ₁ is a fixed parameter, ϕ₂ is a fixed parameter, and a value range of ϕ₁ and ϕ₂ is [0, 1].

8. The electronic device according to claim 6 or 7, wherein the weight mask map corresponding to the first U-channel component is the same as the weight mask map corresponding to the first V-channel component.

9. The electronic device according to any one of claims 6 to 8, wherein the electronic device further comprises a video decoder (303); and
the video decoder (303) is configured to decode an input video stream to generate the color image, and send the color image to the processor, wherein each frame of image in the input video stream is a color image in RGB color space.

10. The electronic device according to any one of claims 6 to 9, wherein the electronic device further comprises a video encoder (304); and
the video encoder (304) is configured to encode each frame of enhanced color image, to generate a video stream, wherein each frame of image in the video stream is a color image in RGB color space.

11. A computer-readable storage medium, wherein the computer-readable storage medium stores a program or instructions, and when the program or the instructions is/are read and executed by one or more processors, the image enhancement method according to any one of claims 1 to 5 is implemented.

## Patentansprüche

1. Bildverbesserungsverfahren, umfassend:
Erhalten (S501), durch eine elektronische Vorrichtung, eines Farbbildes, wobei das Farbbild eine erste Y-Kanalkomponente, eine erste U-Kanalkomponente und eine erste V-Kanalkomponente umfasst;
Durchführen (S502), durch die elektronische Vorrichtung, von Bildgrößenvergrößerung an der ersten U-Kanalkomponente und der ersten V-Kanalkomponente zum Erhalten einer verarbeiteten zweiten U-Kanalkomponente und einer verarbeiteten zweiten V-Kanalkomponente, und Durchführen von Superauflösungsverarbeitung an der ersten Y-Kanalkomponente zum Erhalten einer verarbeiteten zweiten Y-Kanalkomponente;
Durchführen (S503), durch die elektronische Vorrichtung, von Bildverarbeitung mit großem Dynamikbereich am Farbbild zum Erhalten von Gewichtungsmaskenkarten, die jeweils der ersten Y-Kanalkomponente, der ersten U-Kanalkomponente und der ersten V-Kanalkomponente entsprechen;
Erhalten (S504), durch die elektronische Vorrichtung, einer verbesserten Kanalkomponente, die der ersten Y-Kanalkomponente entspricht, auf der Grundlage der zweiten Y-Kanalkomponente und der Gewichtungsmaskenkarte, die der ersten Y-Kanalkomponente entspricht, Erhalten einer verbesserten Kanalkomponente, die der ersten U-Kanalkomponente entspricht, auf der Grundlage der zweiten U-Kanalkomponente und der Gewichtungsmaskenkarte, die der ersten U-Kanalkomponente entspricht, und Erhalten einer verbesserten Kanalkomponente, die der ersten V-Kanalkomponente entspricht, auf der Grundlage der zweiten V-Kanalkomponente und der Gewichtungsmaskenkarte, die der ersten V-Kanalkomponente entspricht, und
Erhalten (S505), durch die elektronische Vorrichtung, eines verbesserten Farbbildes durch Kombination auf der Grundlage der verbesserten Kanalkomponente, die der ersten Y-Kanalkomponente entspricht, der verbesserten Kanalkomponente, die der ersten U-Kanalkomponente entspricht, und der verbesserten Kanalkomponente, die der ersten V-Kanalkomponente entspricht,
wobei die elektronische Vorrichtung eine eingebettete Neuralnetz-Verarbeitungseinheit, NPU, und eine zentrale Verarbeitungseinheit, CPU, umfasst und ein neuronales Multitasking-Netzmodell mit zwei Zweigen in die NPU integriert ist;
wobei das Durchführen von Superauflösungsverarbeitung an der ersten Y-Kanalkomponente umfasst: Durchführen, durch einen ersten Zweig des neuronalen Multitasking-Netzes mit zwei Zweigen in der NPU der elektronischen Vorrichtung, von Superauflösungsverarbeitung an der ersten Y-Kanalkomponente, die in das neuronale Multitasking-Netzmodell mit zwei Zweigen eingegeben wird, zum Ausgeben der zweiten Y-Kanalkomponente;
wobei das Durchführen von Bildgrößenvergrößerung an der ersten U-Kanalkomponente und der ersten V-Kanalkomponente umfasst: Durchführen, durch die CPU der elektronischen Vorrichtung, von Bildgrößenvergrößerung an der ersten U-Kanalkomponente und der ersten V-Kanalkomponente zum Erhalten der verarbeiteten zweiten U-Kanalkomponente und der zweiten V-Kanalkomponente; und wobei das Durchführen von Bildverarbeitung mit großem Dynamikbereich am Farbbild umfasst: Durchführen, durch einen zweiten Zweig des neuronalen Multitasking-Netzes mit zwei Zweigen in der NPU der elektronischen Vorrichtung, von Bildverarbeitung mit großem Dynamikbereich an dem Farbbild, das in das neuronale Multitasking-Netzmodell mit zwei Zweigen eingegeben wird, zum Ausgeben der Gewichtungsmaskenkarten, die jeweils der ersten Y-Kanalkomponente, der ersten U-Kanalkomponente und der ersten V-Kanalkomponente entsprechen.

2. Verfahren nach Anspruch 1, wobei
die verbesserte Kanalkomponente, die der ersten Y-Kanalkomponente entspricht, die folgende Bedingung erfüllt: Y' = W_{Y} × Y, wobei Y' die verbesserte Kanalkomponente repräsentiert, die der ersten Y-Kanalkomponente entspricht, W_{Y} die Gewichtungsmaskenkarte repräsentiert, die der ersten Y-Kanalkomponente entspricht, und Y die zweite Y-Kanalkomponente repräsentiert,
die verbesserte Kanalkomponente, die der ersten U-Kanalkomponente entspricht, die folgende Bedingung erfüllt: U' = Wu × (U - ϕ₁) + ϕ₂, wobei U' die verbesserte Kanalkomponente repräsentiert, die der ersten U-Kanalkomponente entspricht, Wu die Gewichtungsmaskenkarte repräsentiert, die der ersten U-Kanalkomponente entspricht, U die zweite U-Kanalkomponente repräsentiert, ϕ₁ ein fester Parameter ist, ϕ₂ ein fester Parameter ist, und ein Wertebereich von ϕ₁ und ϕ₂ [0, 1] ist; und
die verbesserte Kanalkomponente, die der ersten V-Kanalkomponente entspricht, die folgende Bedingung erfüllt: V' = Wv × (V - ϕ₁) + ϕ₂, wobei V' die verbesserte Kanalkomponente repräsentiert, die der ersten V-Kanalkomponente entspricht, Wv die Gewichtungsmaskenkarte repräsentiert, die der ersten V-Kanalkomponente entspricht, V die zweite V-Kanalkomponente repräsentiert, ϕ₁ ein fester Parameter ist, ϕ₂ ein fester Parameter ist, und ein Wertebereich von ϕ₁ und ϕ₂ [0, 1] ist.

3. Verfahren nach Anspruch 1 oder 2, wobei die der ersten U-Kanalkomponente entsprechende Gewichtungsmaskenkarte die gleiche ist wie die dem ersten V-Kanal entsprechende Gewichtungsmaskenkarte.

4. Verfahren nach einem der Ansprüche 1 bis 3, wobei das Erhalten (S501), durch eine elektronische Vorrichtung, eines Farbbildes umfasst:
Dekodieren, durch einen Videodekodierer der elektronischen Vorrichtung, eines Eingangsvideostroms zum Erzeugen des Farbbildes, wobei jedes Einzelbild im Eingangsvideostrom ein Farbbild im RGB-Farbraum ist.

5. Verfahren nach einem der Ansprüche 1 bis 4, wobei das Verfahren nach dem Erhalten (S505), durch die elektronische Vorrichtung, eines verbesserten Farbbildes durch Kombination ferner umfasst:
Kodieren, durch einen Videokodierer der elektronischen Vorrichtung, jedes verbesserten Einzelfarbbildes zum Erzeugen eines Videostroms, wobei jedes Einzelbild im Videostrom ein Farbbild im RGB-Farbraum ist.

6. Elektronische Vorrichtung, wobei die elektronische Vorrichtung einen Prozessor (301) und einen Speicher (302) umfasst;
der Speicher (302) eine Programmanweisung speichert, und
der Prozessor (301) dafür ausgelegt ist, die im Speicher (302) gespeicherten Programmanweisungen auszuführen und damit die elektronische Vorrichtung in die Lage zu versetzen, die folgenden Vorgänge durchzuführen:
Erhalten eines Farbbildes, wobei das Farbbild eine erste Y-Kanalkomponente, eine erste U-Kanalkomponente und eine erste V-Kanalkomponente umfasst;
Durchführen von Bildgrößenvergrößerung an der ersten U-Kanalkomponente und der ersten V-Kanalkomponente zum Erhalten einer verarbeiteten zweiten U-Kanalkomponente und einer verarbeiteten zweiten V-Kanalkomponente, und Durchführen von Superauflösungsverarbeitung an der ersten Y-Kanalkomponente zum Erhalten einer verarbeiteten zweiten Y-Kanalkomponente;
Durchführen von Bildverarbeitung mit großem Dynamikbereich am Farbbild zum Erhalten von Gewichtungsmaskenkarten, die jeweils der ersten Y-Kanalkomponente, der ersten U-Kanalkomponente und der ersten V-Kanalkomponente entsprechen;
Erhalten einer verbesserten Kanalkomponente, die der ersten Y-Kanalkomponente entspricht, auf der Grundlage der zweiten Y-Kanalkomponente und der Gewichtungsmaskenkarte, die der ersten Y-Kanalkomponente entspricht, Erhalten einer verbesserten Kanalkomponente, die der ersten U-Kanalkomponente entspricht, auf der Grundlage der zweiten U-Kanalkomponente und der Gewichtungsmaskenkarte, die der ersten U-Kanalkomponente entspricht, und Erhalten einer verbesserten Kanalkomponente, die der ersten V-Kanalkomponente entspricht, auf der Grundlage der zweiten V-Kanalkomponente und der Gewichtungsmaskenkarte, die der ersten V-Kanalkomponente entspricht; und
Erhalten eines verbesserten Farbbildes durch Kombination auf der Grundlage der verbesserten Kanalkomponente, die der ersten Y-Kanalkomponente entspricht, der verbesserten Kanalkomponente, die der ersten U-Kanalkomponente entspricht, und der verbesserten Kanalkomponente, die der ersten V-Kanalkomponente entspricht,
wobei der Prozessor (301) eine eingebettete Neuralnetz-Verarbeitungseinheit, NPU, (301B) und eine zentrale Verarbeitungseinheit, CPU, (301A) umfasst und ein neuronales Multitasking-Netzmodell mit zwei Zweigen in die NPU (301B) integriert ist;
die NPU (301B) dafür ausgelegt ist, die im Speicher (302) gespeicherten Programmanweisungen auszuführen und damit die NPU (301B) in die Lage zu versetzen, den folgenden Vorgang durchzuführen:
Durchführen, in einem ersten Zweig des neuronalen Multitasking-Netzes mit zwei Zweigen, von Superauflösungsverarbeitung der ersten Y-Kanalkomponente, die in das neuronale Multitasking-Netzmodell mit zwei Zweigen eingegeben wird, zum Ausgeben der zweiten Y-Kanalkomponente,
die CPU (301A) dafür ausgelegt ist, die im Speicher (302) gespeicherten Programmanweisungen auszuführen und damit die CPU (301A) in die Lage zu versetzen, den folgenden Vorgang durchzuführen:
Durchführen von Bildgrößenvergrößerung an der ersten U-Kanalkomponente und der ersten V-Kanalkomponente zum Erhalten der verarbeiteten zweiten U-Kanalkomponente und der verarbeiteten zweiten V-Kanalkomponente; und
die NPU (301B) ferner dafür ausgelegt ist, die im Speicher (302) gespeicherten Programmanweisungen auszuführen, zu dem Zweck, in einem zweiten Zweig des neuronalen Multitasking-Netzes mit zwei Zweigen Bildverarbeitung mit großem Dynamikbereich an dem Farbbild durchzuführen, das in das neuronale Multitasking-Netzmodell mit zwei Zweigen eingegeben wird, zum Ausgeben der Gewichtungsmaskenkarten, die jeweils der ersten Y-Kanalkomponente, der ersten U-Kanalkomponente und der ersten V-Kanalkomponente entsprechen.

7. Elektronische Vorrichtung nach Anspruch 6, wobei die verbesserte Kanalkomponente, die der ersten Y-Kanalkomponente entspricht, die folgende Bedingung erfüllt: Y' = W_{Y} × Y, wobei Y' die verbesserte Kanalkomponente repräsentiert, die der ersten Y-Kanalkomponente entspricht, W_{Y} die Gewichtungsmaskenkarte repräsentiert, die der ersten Y-Kanalkomponente entspricht, und Y die zweite Y-Kanalkomponente repräsentiert,
die verbesserte Kanalkomponente, die der ersten U-Kanalkomponente entspricht, die folgende Bedingung erfüllt: U' = Wu × (U - ϕ₁) + ϕ₂, wobei U' die verbesserte Kanalkomponente repräsentiert, die der ersten U-Kanalkomponente entspricht, Wu die Gewichtungsmaskenkarte repräsentiert, die der ersten U-Kanalkomponente entspricht, U die zweite U-Kanalkomponente repräsentiert, ϕ₁ ein fester Parameter ist, ϕ₂ ein fester Parameter ist, und ein Wertebereich von ϕ₁ und ϕ₂ [0, 1] ist; und
die verbesserte Kanalkomponente, die der ersten V-Kanalkomponente entspricht, die folgende Bedingung erfüllt: V' = Wv × (V - ϕ₁) + ϕ₂, wobei V' die verbesserte Kanalkomponente repräsentiert, die der ersten V-Kanalkomponente entspricht, Wv die Gewichtungsmaskenkarte repräsentiert, die der ersten V-Kanalkomponente entspricht, V die zweite V-Kanalkomponente repräsentiert, ϕ₁ ein fester Parameter ist, ϕ₂ ein fester Parameter ist, und ein Wertebereich von ϕ₁ und ϕ₂ [0, 1] ist.

8. Elektronische Vorrichtung nach Anspruch 6 oder 7, wobei die der ersten U-Kanalkomponente entsprechende Gewichtungsmaskenkarte die gleiche ist wie die der ersten V-Kanalkomponente entsprechende Gewichtungsmaskenkarte.

9. Elektronische Vorrichtung nach einem der Ansprüche 6 bis 8, wobei die elektronische Vorrichtung ferner einen Videodekodierer (303) umfasst; und
der Videodekodierer (303) dafür ausgelegt ist, einen Eingangsvideostrom zum Erzeugen des Farbbildes zu dekodieren, und das Farbbild an den Prozessor zu senden, wobei jedes Einzelbild im Eingangsvideostrom ein Farbbild im RGB-Farbraum ist.

10. Elektronische Vorrichtung nach einem der Ansprüche 6 bis 9, wobei die elektronische Vorrichtung ferner einen Videokodierer (304) umfasst; und
der Videokodierer (304) dafür ausgelegt ist, jedes verbesserte Einzelfarbbild zum Erzeugen eines Videostroms zu kodieren,
wobei jedes Einzelbild im Videostrom ein Farbbild im RGB-Farbraum ist.

11. Computerlesbares Speichermedium, wobei das computerlesbare Speichermedium ein Programm oder Anweisungen speichert, und wenn das Programm oder die Anweisungen von einem oder mehreren Prozessoren gelesen und ausgeführt wird bzw. werden, das Bildverbesserungsverfahren nach einem der Ansprüche 1 bis 5 implementiert wird.

## Revendications

1. Procédé d'amélioration d'image, comprenant :
l'obtention (S501), par un dispositif électronique, d'une image en couleur, dans lequel l'image en couleur comprend un premier composant de canal Y, un premier composant de canal U et un premier composant de canal V ;
l'exécution (S502), par le dispositif électronique, d'un élargissement de taille d'image sur le premier composant de canal U et le premier composant de canal V, pour obtenir un deuxième composant de canal U traité et un deuxième composant de canal V traité, et l'exécution d'un traitement de super-résolution sur le premier composant de canal Y, pour obtenir un deuxième composant de canal Y traité ;
l'exécution (S503), par le dispositif électronique, d'un traitement d'imagerie de plage dynamique élevée sur l'image en couleur, pour obtenir des cartes de masque de pondération correspondant respectivement au premier composant de canal Y, au premier composant de canal U et au premier composant de canal V ;
l'obtention (S504), par le dispositif électronique, d'un composant de canal amélioré correspondant au premier composant de canal Y sur la base du deuxième composant de canal Y et de la carte de masque de pondération correspondant au premier composant de canal Y, l'obtention d'un composant de canal amélioré correspondant au premier composant de canal U sur la base du deuxième composant de canal U et de la carte de masque de pondération correspondant au premier composant de canal U, et l'obtention d'un composant de canal amélioré correspondant au premier composant de canal V sur la base du deuxième composant de canal V et de la carte de masque de pondération correspondant au premier composant de canal V ; et
l'obtention (S505), par le dispositif électronique, d'une image en couleur améliorée à travers une combinaison sur la base du composant de canal amélioré correspondant au premier composant de canal Y, du composant de canal amélioré correspondant au premier composant de canal U et du composant de canal amélioré correspondant au premier composant de canal V,
dans lequel le dispositif électronique comprend une unité de traitement de réseau neuronal NPU intégrée et une unité de traitement centrale CPU, et un modèle de réseau neuronal multitâche à deux branches est intégré dans la NPU ;
dans lequel l'exécution du traitement de super-résolution sur le premier composant de canal Y implique : l'exécution, par une première branche du réseau neuronal multitâche à deux branches dans la NPU du dispositif électronique, d'un traitement de super-résolution sur le premier composant de canal Y entré dans le modèle de réseau neuronal multitâche à deux branches, pour délivrer le deuxième composant de canal Y ;
dans lequel l'exécution de l'élargissement de taille d'image sur le premier composant de canal U et le premier composant de canal V implique : l'exécution, par la CPU du dispositif électronique, d'un élargissement de taille d'image sur le premier composant de canal U et le premier composant de canal V, pour obtenir le deuxième composant de canal U traité et le deuxième composant de canal V ; et
dans lequel l'exécution d'un traitement d'imagerie de plage dynamique élevée sur l'image en couleur implique : l'exécution, par une deuxième branche du réseau neuronal multitâche à deux branches dans la NPU du dispositif électronique, d'un traitement d'imagerie de plage dynamique élevée sur l'image en couleur entrée dans le modèle de réseau neuronal multitâche à deux branches, pour délivrer les cartes de masque de pondération correspondant respectivement au premier composant de canal Y, au premier composant de canal U et au premier composant de canal V.

2. Procédé selon la revendication 1, dans lequel
le composant de canal amélioré correspondant au premier composant de canal Y satisfait la condition suivante : Y' = W_{Y} × Y, dans laquelle Y' représente le composant de canal amélioré correspondant au premier composant de canal Y, W_{Y} représente la carte de masque de pondération correspondant au premier composant de canal Y, et Y représente le deuxième composant de canal Y ;
le composant de canal amélioré correspondant au premier composant de canal U satisfait la condition suivante : U' = W_{U} × (U - ϕ₁) + ϕ₂, dans laquelle U' représente le composant de canal amélioré correspondant au premier composant de canal U, Wu représente la carte de masque de pondération correspondant au premier composant de canal U, U représente le deuxième composant de canal U, ϕ₁ est un paramètre fixe, ϕ₂ est un paramètre fixe, et une plage de valeurs des plages ϕ₁ et ϕ₂ est [0, 1] ; et
le composant de canal amélioré correspondant au premier composant de canal V satisfait la condition suivante : V' = W_{V} × (V - ϕ₁) + ϕ₂, dans laquelle V' représente le composant de canal amélioré correspondant au premier composant de canal V, Wv représente la carte de masque de pondération correspondant au premier composant de canal V, V représente le deuxième composant de canal V, ϕ₁ est un paramètre fixe, ϕ₂ est un paramètre fixe, et une plage de valeurs de ϕ₁ et ϕ₂ est [0, 1].

3. Procédé selon la revendication 1 ou 2, dans lequel la carte de masque de pondération correspondant au premier composant de canal U est la même que la carte de masque de pondération correspondant au premier canal V.

4. Procédé selon l'une quelconque des revendications 1 à 3, dans lequel l'obtention (S501), par un dispositif électronique, d'une image en couleur comprend :
le décodage, par un décodeur vidéo du dispositif électronique, d'un flux vidéo d'entrée pour générer l'image en couleur, dans lequel chaque trame d'image dans le flux vidéo d'entrée est une image en couleur dans un espace de couleur RGB.

5. Procédé selon l'une quelconque des revendications 1 à 4, dans lequel après l'obtention (S505), par le dispositif électronique, d'une image en couleur améliorée à travers une combinaison, le procédé comprend en outre :
le codage, par un codeur vidéo du dispositif électronique, de chaque trame d'une image en couleur améliorée, pour générer un flux vidéo, dans lequel chaque trame d'image dans le flux vidéo est une image en couleur dans un espace de couleur RGB.

6. Dispositif électronique, dans lequel le dispositif électronique comprend un processeur (301) et une mémoire (302) ;
la mémoire (302) stocke une instruction de programme ; et
le processeur (301) est configuré pour exécuter les instructions de programme stockées dans la mémoire (302), afin de permettre au dispositif électronique d'exécuter les opérations suivantes :
l'obtention d'une image en couleur, dans lequel l'image en couleur comprend un premier composant de canal Y, un premier composant de canal U et un premier composant de canal V ;
l'exécution d'un élargissement de taille d'image sur le premier composant de canal U et le premier composant de canal V, pour obtenir un deuxième composant de canal U traité et un deuxième composant de canal V traité, et l'exécution d'un traitement de super-résolution sur le premier composant de canal Y, pour obtenir un deuxième composant de canal Y traité ;
l'exécution d'un traitement d'imagerie de plage dynamique élevée sur l'image en couleur, pour obtenir des cartes de masque de pondération correspondant respectivement au premier composant de canal Y, au premier composant de canal U et au premier composant de canal V ;
l'obtention d'un composant de canal amélioré correspondant au premier composant de canal Y sur la base du deuxième composant de canal Y et de la carte de masque de pondération correspondant au premier composant de canal Y, l'obtention d'un composant de canal amélioré correspondant au premier composant de canal U sur la base du deuxième composant de canal U et de la carte de masque de pondération correspondant au premier composant de canal U, et l'obtention d'un composant de canal amélioré correspondant au premier composant de canal V sur la base du deuxième composant de canal V et de la carte de masque de pondération correspondant au premier composant de canal V ; et
l'obtention d'une image en couleur améliorée à travers une combinaison sur la base du composant de canal amélioré correspondant au premier composant de canal Y, du composant de canal amélioré correspondant au premier composant de canal U et du composant de canal amélioré correspondant au premier composant de canal V,
dans lequel le processeur (301) comprend une unité de traitement de réseau neuronal NPU intégrée (301B) et une unité de traitement centrale CPU (301A), et un modèle de réseau neuronal multitâche à deux branches est intégré dans la NPU (301B) ;
la NPU (301B) est configurée pour exécuter les instructions de programme stockées dans la mémoire (302), pour permettre à la NPU (301B) d'exécuter l'opération suivante :
l'exécution, dans une première branche du réseau neuronal multitâche à deux branches, d'un traitement de super-résolution sur le premier composant de canal Y entré dans le modèle de réseau neuronal multitâche à deux branches, pour délivrer le deuxième composant de canal Y ;
la CPU (301A) est configurée pour exécuter les instructions de programme stockées dans la mémoire (302), pour permettre à la CPU (301A) d'exécuter l'opération suivante :
l'exécution d'un élargissement de taille d'image sur le premier composant de canal U et le premier composant de canal V, pour obtenir le deuxième composant de canal U traité et le deuxième composant de canal V traité ; et
la NPU (301B) est configurée en outre pour exécuter les instructions de programme stockées dans la mémoire (302), pour exécuter, dans une deuxième branche du réseau neuronal multitâche à deux branches, un traitement d'imagerie de plage dynamique élevée sur l'image en couleur entrée dans le modèle de réseau neuronal multitâche à deux branches, pour délivrer les cartes de masque de pondération correspondant respectivement au premier composant de canal Y, au premier composant de canal U et au premier composant de canal V.

7. Dispositif électronique selon la revendication 6, dans lequel le composant de canal amélioré correspondant au premier composant de canal Y satisfait la condition suivante : Y' = W_{Y} × Y, dans laquelle Y' représente le composant de canal amélioré correspondant au premier composant de canal Y, W_{Y} représente la carte de masque de pondération correspondant au premier composant de canal Y, et Y représente le deuxième composant de canal Y ;
le composant de canal amélioré correspondant au premier composant de canal U satisfait la condition suivante : U' = W_{U} × (U - ϕ₁) + ϕ₂, dans laquelle U' représente le composant de canal amélioré correspondant au premier composant de canal U, Wu représente la carte de masque de pondération correspondant au premier composant de canal U, U représente le deuxième composant de canal U, ϕ₁ est un paramètre fixe, ϕ₂ est un paramètre fixe, et une plage de valeurs de ϕ₁ et ϕ₂ est [0, 1] ; et
le composant de canal amélioré correspondant au premier composant de canal V satisfait la condition suivante : V' = W_{V} × (V - ϕ₁) + ϕ₂, dans laquelle V' représente le composant de canal amélioré correspondant au premier composant de canal V, Wv représente la carte de masque de pondération correspondant au premier composant de canal V, V représente le deuxième composant de canal V, ϕ₁ est un paramètre fixe, ϕ₂ est un paramètre fixe, et une plage de valeurs de ϕ₁ et ϕ₂ est [0, 1].

8. Dispositif électronique selon la revendication 6 ou 7, dans lequel la carte de masque de pondération correspondant au premier composant de canal U est la même que la carte de masque de pondération correspondant au premier composant de canal V.

9. Dispositif électronique selon l'une quelconque des revendications 6 à 8, dans lequel le dispositif électronique comprend en outre un décodeur vidéo (303) ; et
le décodeur vidéo (303) est configuré pour décoder un flux vidéo d'entrée afin de générer l'image en couleur, et envoyer l'image en couleur au processeur, dans lequel chaque trame d'image dans le flux vidéo d'entrée est une image en couleur dans un espace de couleur RGB.

10. Dispositif électronique selon l'une quelconque des revendications 6 à 9, dans lequel le dispositif électronique comprend en outre un codeur vidéo (304) ; et
le codeur vidéo (304) est configuré pour coder chaque trame d'une image en couleur améliorée, afin de générer un flux vidéo, dans lequel chaque trame d'image dans le flux vidéo est une image en couleur dans un espace de couleur RGB.

11. Support de stockage lisible par ordinateur, dans lequel le support de stockage lisible par ordinateur stocke un programme ou des instructions, et lorsque le programme ou les instructions sont lus et exécutés par un ou des processeurs, le procédé d'amélioration d'image selon l'une quelconque des revendications 1 à 5 est mis en oeuvre.
